(19) Europäisches Patentamt / European Patent Office / Office européen des brevets

(11) **EP 4 578 705 A1**

(12) **EUROPEAN PATENT APPLICATION**
published in accordance with Art. 153(4) EPC

(43) Date of publication:
**02.07.2025 Bulletin 2025/27**

(21) Application number: **23864410.8**

(22) Date of filing: **21.06.2023**

(51) International Patent Classification (IPC):
**B60L 15/20** $^{(2006.01)}$       **B60R 16/023** $^{(2006.01)}$

(52) Cooperative Patent Classification (CPC):
**B60L 15/20; B60R 16/023;** Y02T 10/72

(86) International application number:
**PCT/CN2023/101893**

(87) International publication number:
**WO 2024/055671 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 CN 202211117088**

(71) Applicant: **Huawei Digital Power Technologies
Co., Ltd.
Shenzhen, Guangdong 518043 (CN)**

(72) Inventors:
• **NI, Hui
Shenzhen, Guangdong 518043 (CN)**
• **NING, Yu
Shenzhen, Guangdong 518043 (CN)**
• **KROPF, Marc
Shenzhen, Guangdong 518043 (CN)**

(74) Representative: **Maiwald GmbH
Engineering
Elisenhof
Elisenstrasse 3
80335 München (DE)**

(54) **VEHICLE CONTROL UNIT, MOTOR CONTROL UNIT, AND RELATED DEVICE**

(57)     A vehicle control unit (104) is provided, and a motor control unit and a related device are further provided. The motor control unit (103) is connected to the vehicle control unit (104) and sends a first signal to the vehicle control unit (104). The motor control unit (105) is connected to the motor control unit (103) or the vehicle control unit (104) and sends a second signal. The vehicle control unit (104) is configured to send a third signal to the motor control unit (103). Before receiving the second signal, the vehicle control unit (104) generates the third signal by using the first signal sent by the motor control unit (103), and sends the third signal to any one or more of at least one motor control unit (103), so that the motor control unit (103) that receives the third signal adjusts torque, to perform stability control on a vehicle. In this way, a control speed of an entire control process is faster, and a slip rate of the vehicle on a slippery road surface can be reduced.

First signal

Electronic stability system 105 → Second signal → Vehicle control unit 104 → Third signal → Motor control unit

FIG. 2

EP 4 578 705 A1

# Description

## CROSS-REFERENCE TO RELATED APPLICATIONS

This application claims priority to Chinese Patent Application No. 202211117088.6, filed with the China National Intellectual Property Administration on September 14, 2022 and entitled "VEHICLE CONTROL UNIT, MOTOR CONTROL UNIT, AND RELATED DEVICE", which is incorporated herein by reference in its entirety.

## TECHNICAL FIELD

This application relates to the field of vehicle driving, and in particular, to a vehicle control unit, a motor control unit, and a related device.

## BACKGROUND

In a traveling process of a vehicle, a motor control unit (motor control unit, MCU) inside the vehicle is mainly responsible for adjusting a magnitude of drive torque of a motor based on vehicle information and driver information. The vehicle information mainly includes a wheel speed, an acceleration, a yaw angle, a motor rotational speed, a magnitude of torque, and the like. The driver information mainly includes an opening degree of an accelerator pedal, a gradient of the opening degree of the accelerator pedal, and the like. Driving experience of a driver is directly related to torque control effect of the vehicle. The driving experience depends on whether the vehicle can accurately and quickly respond to acceleration and deceleration requirements. In addition, the driving experience is related to application scenarios, and the driver has different power requirements on the vehicle in different application scenarios. For example, in an icy and snowy road or in a turning condition, if the motor executes according to a delivered instruction, a tire slips. In this case, an electronic stability program (electronic stability program, ESP) identifies that the tire slips, calculates proper torque, and requests, via a vehicle control unit (vehicle control unit, VCU), the MCU to execute corresponding torque.

A traction control system (traction control system, TCS) of an existing vehicle is implemented based on the ESP. The traction control system controls generation of additional yaw torque by generating braking power vectors on left and right wheels of the vehicle, to improve vehicle stability.

Specifically, the ESP system may determine a slipping status of the vehicle, to calculate respective torque of front and rear axles, and send a torque request determined by the ESP to the vehicle control unit via a controller area network (controller area network, CAN). After determining a current vehicle status, the VCU arbitrates torque in the torque request, and sends an arbitrated torque request to the MCU. The MCU controls the motor to execute the arbitrated torque request sent by the VCU, and feeds back current actual torque of the vehicle to the ESP control system. The ESP control system performs further determining and calculation based on the slipping status of the vehicle and the actual torque fed back by the MCU, and sends a recalculated torque request to the VCU in a next communication period.

It can be learned from the foregoing descriptions that the torque request (a torque control instruction) is sent by the ESP. Therefore, the vehicle tends to be stable for long time through torque control. In this case, in an extreme or harsh scenario, long control time tends to increase a slipping probability of the vehicle on a road surface. In view of this, a vehicle control unit or a motor control unit needs to be proposed, to improve a torque control speed, thereby improving vehicle maneuverability.

## SUMMARY

This application provides a vehicle control unit, a motor control unit, and a related device. Communication between the vehicle control unit and the motor control unit is established, so that the motor control unit can adjust torque, to perform stability control on a vehicle.

According to a first aspect, this application provides a vehicle control unit. The vehicle control unit is connected to at least one motor control unit and receives a first signal sent by the at least one motor control unit, the vehicle control unit is connected to an electronic stability program and receives a second signal sent by the electronic stability program, and the vehicle control unit is configured to: in response to the first signal, send a third signal to any one or more of the at least one motor control unit before receiving the second signal, so that the motor control unit that receives the third signal adjusts torque, to perform stability control on a vehicle. The first signal indicates a running status of a motor, and the second signal indicates a traveling status of the vehicle.

The first signal may include torque indication information, and the torque indication information may include a front axle torque saturation state signal and/or a rear axle torque saturation state signal, or a rotational speed of a front axle motor and a rotational speed of a rear axle motor. The second signal may include an acceleration, a yaw angle, a wheel speed, and a driver input parameter. The third signal may indicate a magnitude of the torque output by the motor control unit.

After communication is established between the vehicle control unit and the electronic stability program, a signal transmission speed is usually low. Therefore, before receiving the second signal, the vehicle control unit in this application may generate the third signal by using the first signal sent by the motor control unit, and send the third signal to the any one or more of the at least one motor control unit, so that the motor control unit that receives the third signal adjusts the torque, to perform stability control on the vehicle. In this way, a control speed of an entire control process is faster, to reduce a slip rate of the entire vehicle on a slippery road surface.

With reference to the first aspect, in a possible implementation, the vehicle control unit is configured to send the third signal to the any one or more of the at least one motor control unit in response to the second signal, so that the motor control unit that receives the third signal adjusts the torque, to perform stability control on the vehicle.

When the vehicle already slips seriously, to perform stability control on the vehicle as soon as possible, when not receiving the first signal, the vehicle control unit may generate the third signal by using the second signal that is received most recently, and send the third signal to the any one or more of the at least one motor control unit, so that the motor control unit that receives the third signal adjusts the torque, to perform stability control on the vehicle. In this way, the motor control unit may be directly controlled by using the second signal sent by the electronic stability program via the vehicle control unit, to obtain a faster control speed in a serious slip scenario.

With reference to the first aspect, in another possible implementation, the vehicle control unit is configured to send the third signal to the any one or more of the at least one motor control unit in response to receiving the first signal and the second signal, so that the motor control unit that receives the third signal adjusts the torque, to perform stability control on the vehicle.

To accurately allocate torque power to each wheel of the vehicle, after receiving the first signal and the second signal, the vehicle control unit arbitrates the torque after determining a current vehicle status of the vehicle, and then the vehicle control unit sends the third signal to the any one or more of the at least one motor control unit, thereby improving vehicle maneuverability.

With reference to any one of the foregoing possible implementations of the first aspect, a signal sending period of the first signal sent by the at least one motor control unit is less than a signal sending period of the second signal sent by the electronic stability program. Because the signal sending period of the first signal sent by the motor control unit is less than the signal sending period of the second signal sent by the electronic stability program, if the first signal sent by the motor control unit is used to generate the third signal, the control speed of the entire control process can be faster, and the slip rate of the entire vehicle on the slippery road surface can be reduced.

In a possible implementation, the first signal indicates that the motor of the vehicle reaches a torque saturation state; the second signal includes any one or more of the following parameters: an acceleration, a yaw angle, a wheel speed, and a driver input parameter; and the third signal indicates a magnitude of the torque output by the motor control unit. During implementation of this embodiment of this application, the motor control unit may determine, based on a motor rotational speed the vehicle and another parameter, whether the front axle motor of the vehicle reaches a saturation state and whether the rear axle motor of the vehicle reaches a saturation state. The vehicle control unit adjusts a torque control signal based on the saturation state of the motor. When the front axle reaches the torque saturation state, the vehicle control unit no longer continuously allocates torque to the front axle. When the rear axle reaches the torque saturation state, the vehicle control unit no longer continuously allocates torque to the rear axle.

In a possible implementation, the first signal includes a motor rotational speed of the vehicle; the second signal includes any one or more of the following parameters: an acceleration, a yaw angle, a wheel speed, and a driver input parameter; and the third signal indicates a magnitude of the torque output by the motor control unit. During implementation of this embodiment of this application, the motor control unit directly sends the motor rotational speed of the vehicle to the vehicle control unit, and the vehicle control unit determines, based on the motor rotational speed of the vehicle and another parameter, whether the front axle motor of the vehicle reaches the saturation state and whether the rear axle motor of the vehicle reaches the saturation state, to adjust the torque control signal based on the saturation state of the motor. When the front axle reaches the torque saturation state, torque is no longer continuously allocated to the front axle, and when the rear axle reaches the torque saturation state, torque is no longer continuously allocated to the rear axle.

In a possible implementation, the vehicle control unit receives a fourth signal sent by the at least one motor control unit, the fourth signal indicates actual torque of the motor of the vehicle, and the vehicle control unit is configured to send the third signal to the any one or more of the at least one motor control unit in response to the fourth signal and the first signal and/or the second signal.

To accurately allocate the torque power to each wheel of the vehicle, after receiving the first signal and/or the second signal, the vehicle control unit determines the current vehicle status of the vehicle based on the actual torque of the motor of the vehicle for arbitration, and then the vehicle control unit sends the third signal to the any one or more of the at least one motor control unit, thereby greatly improving the vehicle maneuverability.

According to a second aspect, this application provides a motor control unit. The motor control unit is connected to a vehicle control unit and sends a first signal to the vehicle control unit, an electronic stability program is connected to the motor control unit or the vehicle control unit and sends a second signal; and the vehicle control unit is configured to send a third signal to the motor control unit. The first signal indicates a running status of a motor, and the second signal indicates a traveling status of a vehicle. After the motor control unit sends the first signal, the motor control unit outputs a control signal to a drive motor before or after receiving the second signal or the third signal, to perform stability control on the vehicle.

In a possible implementation, the motor control unit is connected to the electronic stability program and receives the second signal sent by the electronic stability program, and the motor control unit is configured to send the first signal to the vehicle control unit in response to the second signal.

In a possible implementation, the motor control unit is configured to adjust torque in response to the second signal and the third signal, to perform stability control on the vehicle.

In a possible implementation, the motor control unit is configured to adjust the torque in response to the second signal and the third signal, to perform stability control on the vehicle.

In a possible implementation, the first signal indicates that a motor of the vehicle reaches a torque saturation state, and the second signal includes any one or more of the following parameters: an acceleration, a yaw angle, a wheel speed, and a driver input parameter.

The third signal indicates a magnitude of torque output by the motor control unit.

In a possible implementation, the first signal includes a motor rotational speed of the vehicle; the second signal includes any one or more of the following parameters: an acceleration, a yaw angle, a wheel speed, and a driver input parameter; and the third signal indicates a magnitude of torque output by the motor control unit.

In a possible implementation, the motor control unit is configured to send a fourth signal to the vehicle control unit, where the fourth signal indicates actual torque of the motor of the vehicle.

According to a third aspect, this application provides a vehicle control unit, including a torque indication information receiving module, configured to receive torque indication information sent by a motor control unit, where the torque indication information is used by the vehicle control unit to determine a torque control signal; and a torque allocation module, configured to send a front axle torque control signal and a rear axle torque control signal to the motor control unit, so that the motor control unit adjusts a magnitude of front axle torque and a magnitude of rear axle torque, to perform stability control on a vehicle.

In a possible implementation, the torque indication information receiving module is specifically configured to receive a front axle torque saturation state signal and/or a rear axle torque saturation state signal sent by the motor control unit, where the front axle torque saturation state signal indicates that a front axle motor of the vehicle reaches a saturation state, and a rear axle torque saturation state signal indicates that a rear axle motor of the vehicle reaches a saturation state; or receive a rotational speed of the front axle motor and a rotational speed of the rear axle motor that are sent by the motor control unit, to determine whether the front axle motor and the rear axle motor reach a saturation state.

In a possible implementation, the torque indication information receiving module is specifically configured to: determine a front axle slip rate based on the rotational speed of the front axle motor, the rotational speed of the rear axle motor, and a current vehicle speed; determine a rear axle slip rate based on a speed of rear wheels and the current vehicle speed; determine, based on the front axle slip rate, whether the front axle motor of the vehicle reaches the saturation state; and determine, based on the rear axle slip rate, whether the rear axle motor of the vehicle reaches the saturation state.

In a possible implementation, the torque indication information receiving module is specifically configured to: when the front axle slip rate is within a target slip rate range, determine that the front axle motor of the vehicle reaches the saturation state; and when the rear axle slip rate is within the target slip rate range, determine that the rear axle motor of the vehicle reaches the saturation state.

In a possible implementation, the torque allocation module is specifically configured to: determine a first front axle torque control signal and a first rear axle torque control signal based on a vehicle speed, a wheel speed, a vehicle acceleration, a yaw angle signal, a driver input signal, and total front and rear torque, where the first front axle torque control signal is configured to control the front axle motor to be first torque, the first rear axle torque control signal is configured to control the rear axle motor to be second torque, and a sum of the first torque and the second torque is the total front and rear torque; when the front axle motor reaches the saturation state, send a second front axle torque control signal to the motor control unit, where the second front axle torque control signal is used to control the torque of the front axle motor to remain unchanged, otherwise, send the first front axle torque control signal to the motor control unit; and when the rear axle motor reaches the saturation state, send a second rear axle torque control signal to the motor control unit, where the second rear axle torque control signal is used to control the torque of the rear axle motor to remain unchanged, otherwise, send the first rear axle torque control signal to the motor control unit.

In a possible implementation, the vehicle control unit further includes a current torque receiving module, configured to receive the front axle torque and the rear axle torque of the current vehicle that are sent by the motor control unit; and the torque allocation module is specifically configured to send the front axle torque control signal and the rear axle torque control signal to the motor control unit based on the torque indication information, the front axle torque of the current vehicle, and the rear axle torque of the current vehicle.

According to a fourth aspect, this application provides a motor control unit, including a signal output module, configured to output torque indication information to a vehicle control unit, where the torque indication information is used by the vehicle control unit to determine a torque control signal; and a torque receiving and control module, configured to receive a front axle torque control signal and a rear axle torque control signal that are sent by the vehicle control unit, and adjust a magnitude of front axle torque and a magnitude of rear axle torque based on the front axle torque control signal and the rear axle torque control signal, to perform stability control on a vehicle. When it is determined that the vehicle is unstable, a front axle motor and a rear axle motor are controlled to keep running at a current rotational speed. The torque indication information is output to the vehicle control unit, whether the front axle motor of the vehicle reaches a saturation state and whether the rear axle motor of the vehicle reaches a saturation state are determined based on a front axle torque saturation state signal and/or a rear axle torque saturation state signal, a rotational speed of the front axle motor, and a rotational speed of the rear axle motor, and the vehicle control unit adjusts the torque control signal based on the saturation state of the motor. Therefore, a slip rate on a slippery road surface is significantly reduced, a closed-loop speed of the vehicle from an unstable state to a stable state is shortened from seconds to milliseconds, and torque power allocation between a front axle and a rear axle can be further implemented, thereby greatly improving vehicle maneuverability.

In addition, because the vehicle uses the vehicle control unit and the motor control unit as execution bodies of the stability control, control response of the vehicle is faster, so that time for the vehicle to enter the stable state from the unstable state can be shorter, thereby further ensuring vehicle safety.

In a possible implementation, the signal output module is specifically configured to output the front axle torque saturation state signal and/or the rear axle torque saturation state signal to the vehicle control unit, where the front axle torque saturation state signal indicates that the front axle motor of the vehicle reaches the saturation state, and the rear axle torque saturation state signal indicates that the rear axle motor of the vehicle reaches the saturation state; or output the rotational speed of the front axle motor and the rotational speed of the rear axle motor to the vehicle control unit, so that the vehicle control unit determines whether the front axle motor and the rear axle motor of the vehicle reach the saturation state. The torque indication information may include both the front axle torque saturation state signal and/or the rear axle torque saturation state signal, the rotational speed of the front axle motor, and the rotational speed of the rear axle motor, so that the foregoing two types of information are mutually redundant and back up each other. This means that both the motor control unit and the vehicle control unit determine the saturation state, thereby improving accuracy. The torque indication information is not limited to the front axle torque saturation state signal, the rear axle torque saturation state signal, the rotational speed of the front axle motor, and the rotational speed of the rear axle motor. Any parameter that may be used to determine whether the front axle motor reaches the saturation state and whether the rear axle motor of the vehicle reaches the saturation state may be used as torque indication information and sent to the vehicle control unit.

In a possible implementation, the motor control unit further includes a vehicle speed and wheel speed obtaining module, configured to obtain a current vehicle speed and a wheel speed. The signal output module is specifically configured to: determine a front axle slip rate based on a speed of front wheels and the current vehicle speed, and determine a rear axle slip rate based on a speed of rear wheels and the current vehicle speed; determine, based on the front axle slip rate, whether the front axle motor of the vehicle reaches the saturation state, to send the front axle torque saturation state signal to the vehicle control unit; and determine, based on the rear axle slip rate, whether the rear axle motor of the vehicle reaches the saturation state, to send the rear axle torque saturation state signal to the vehicle control unit. In the vehicle control field, a smaller absolute value of the slip rate of the vehicle indicates better braking effect, and shorter time for the vehicle to enter the stable state from the unstable state, thereby further ensuring the vehicle safety. When the vehicle is in the unstable state, the front axle slip rate and the rear axle slip rate of the vehicle are monitored, to control the front axle torque and the rear axle torque, and continuously perform stability control on the vehicle.

In a possible implementation, a slip rate calculation method may meet the following formula:

$$\lambda = \frac{(\omega * R - V)}{\omega * R}$$

, where $\lambda$ is the slip rate, $\omega$ is a tire rotational speed, R is a tire radius, and V is a vehicle speed.

When the tire rotational speed cannot be obtained, the slip rate calculation method may comply with the following formula:

$$\lambda = \frac{(\omega_m * Ratio * R - V)}{\omega_m * Ratio * R},$$

where $\lambda$ is the slip rate, $\omega_m$ is the tire rotational speed, Ratio is a reducer speed ratio, R is the tire radius, and V is the vehicle speed.

In a possible implementation, the signal output module is specifically configured to: when the front axle slip rate is within a target slip rate range, determine that the front axle motor of the vehicle reaches the saturation state, and output the front axle torque saturation state signal to the vehicle control unit; and when the rear axle slip rate is within the target slip rate range, determine that the rear axle motor of the vehicle reaches the saturation state, and output the rear axle torque saturation state signal to the vehicle control unit. When the front axle slip rate is within a target slip rate range, it is determined that the front axle motor of the vehicle reaches the saturation state, and the front axle torque saturation state signal is output to the vehicle control unit; and when the rear axle slip rate is within the target slip rate range, it is determined that the rear axle motor of the vehicle reaches the saturation state, and the rear axle torque saturation state signal is output to the vehicle control unit.

In a possible implementation, the motor control unit further includes a yaw angle and acceleration obtaining module, configured to obtain a yaw angle and an acceleration of the current vehicle; and the signal output module is further configured to output the torque indication information to the vehicle control unit based on the current vehicle speed, the wheel speed, the yaw angle of the current vehicle, and the acceleration of the current vehicle. A vehicle sensor is configured to collect parameters such as a longitudinal acceleration, a lateral acceleration, and a yawing angular velocity of the vehicle in real time. Based on the longitudinal acceleration, the lateral acceleration, and the yawing angular velocity of the vehicle and with reference to the current vehicle speed and the wheel speed, it can also be determined whether the front axle/rear axle motor reaches the saturation state.

In a possible implementation, the motor control unit further includes a current torque output module, configured to obtain the front axle torque and the rear axle torque of the current vehicle, and send the front axle torque and the rear axle torque of the current vehicle to the vehicle control unit, so that the vehicle control unit determines the front axle torque control signal and the rear axle torque control signal based on the torque indication information, the front axle torque of the current vehicle, and the rear axle torque of the current vehicle. When the front axle motor reaches the saturation state, the vehicle control unit may generate the torque control signal based on the front axle torque of the current vehicle. When the rear axle motor reaches the saturation state, the vehicle control unit may generate the torque control signal based on the rear axle torque of the current vehicle. In other words, the torque control signal may enable the motor control unit to maintain original torque to control the motor.

To shorten the time for the vehicle to enter the stable state from the unstable state, in a possible implementation, the motor control unit further includes an instability detection module, configured to: when determining that a status of the vehicle is unstable due to slipping, control the front axle motor and the rear axle motor to keep running at the current rotational speed. The motor control unit may determine the status of the vehicle based on an angular velocity error between an actual yawing angular velocity of the vehicle and a target yawing angular velocity at a current moment; further determine the actual yawing angular velocity based on a traveling parameter of the vehicle, and determine the status of the vehicle by analyzing parameters: a longitudinal vehicle speed, a wheel steering angle, and the actual yawing angular velocity; determine the target yawing angular velocity based on the longitudinal vehicle speed, the wheel steering angle, and a steering characteristic factor; calculate the angular velocity error between the actual yawing angular velocity and the target yawing angular velocity; and when the angular velocity error exceeds a specified threshold range, determine that the status of the vehicle is unstable; otherwise, determine that the status of the vehicle is stable. When it is determined that the status of the vehicle is unstable due to slipping, the front axle motor and the rear axle motor are controlled to keep running at the current rotational speed, so that the time for the vehicle to enter the stable state from the unstable state is shorter, thereby further ensuring the vehicle safety.

According to a fifth aspect, this application provides a powertrain, including the vehicle control unit according to the first aspect or the motor control unit according to the second aspect.

According to a sixth aspect, this application provides an electric vehicle, including the vehicle control unit according to the first aspect or the motor control unit according to the second aspect.

For technical effect that can be achieved in the fifth aspect and the sixth aspect, refer to the technical effect that can be achieved in any one of the foregoing possible designs of the first aspect. Repeated parts are not described in detail.

## BRIEF DESCRIPTION OF DRAWINGS

FIG. 1 is a diagram of a structure of an electric vehicle;
FIG. 2 is a diagram 1 of communication between a vehicle control unit and a motor control unit according to this application;
FIG. 3 is a diagram 2 of communication between a vehicle control unit and a motor control unit according to this application;
FIG. 4 is a schematic flowchart 1 of a torque control method;
FIG. 5 is a schematic flowchart 2 of a torque control method;
FIG. 6 is a schematic flowchart 3 of a torque control method;
FIG. 7 is a diagram of a structure of a motor control unit;
FIG. 8 is a diagram of a structure of a vehicle control unit; and
FIG. 9 is a diagram of a structure of a torque control device.

## DESCRIPTION OF EMBODIMENTS

Conventional acceleration slip regulation control of an existing vehicle mainly relates to three key control modules: an ESP, a VCU, and an MCU. The VCU may perform torque parsing based on an input of a driver and motor efficiency, to deliver a torque request to the MCU for execution, and the MCU drives a motor based on the torque request delivered by the VCU. In an icy and snowy road or in a turning condition, if the MCU continues to be controlled according to the instruction delivered by the VCU, a tire slips. In this condition, the ESP identifies that the tire slips, calculates proper torque, and requests, via the VCU, the MCU to execute corresponding torque.

It can be learned from the foregoing descriptions that the torque request is sent by the ESP. Therefore, the vehicle tends to be stable for long time through torque control. In this case, in an extreme or harsh scenario, long control time tends to increase a slipping probability of the vehicle on a road surface. In view of this, a vehicle control unit, a motor control unit, and a related device need to be proposed. Communication between the vehicle control unit and the motor control unit is established, so that the motor control unit can adjust torque, to perform stability control on a vehicle.

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The technical solutions of this application are further described below in detail with reference to the accompanying drawings.

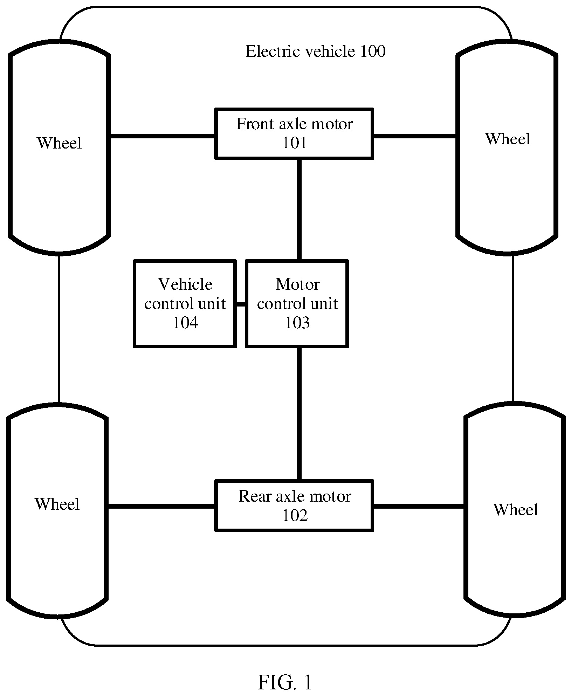

FIG. 1 is a diagram of a structure of an electric vehicle. As shown in FIG. 1, the electric vehicle 100 includes a front axle motor 101, a rear axle motor 102, a motor control unit 103, a vehicle control unit 104, and four wheels. The front axle motor 101 is configured to drive two front wheels to run, the rear axle motor 102 is configured to drive two rear wheels to run, the front axle motor 101 and the rear axle motor 102 are connected to the motor control unit 103, and the motor control unit 103 is connected to the vehicle control unit 104. Optionally, the electric vehicle 100 may further include an accelerator pedal (not shown in FIG. 1). When a driver needs to change a current vehicle speed of the electric vehicle, the driver may change an opening degree of the accelerator pedal, and the opening degree may be determined by detecting a depth of the accelerator pedal by a displacement sensor installed on the accelerator pedal.

The motor control unit (motor control unit, MCU) 103 is mainly responsible for adjusting a magnitude of drive torque of the motor based on vehicle information and driver information.

The vehicle control unit 104 has a power control capability, and can control vehicle traveling, stability, and the like. The vehicle control unit 104 may obtain various types of data from a vehicle-mounted sensor, a driver input apparatus, and an advanced driver assistance system (advanced driver assistance system, ADAS), and perform data processing on the obtained various types of data, to perform vehicle maneuverability control.

The following describes an example of performing stability control on the vehicle with reference to the structure of the electric vehicle 100.

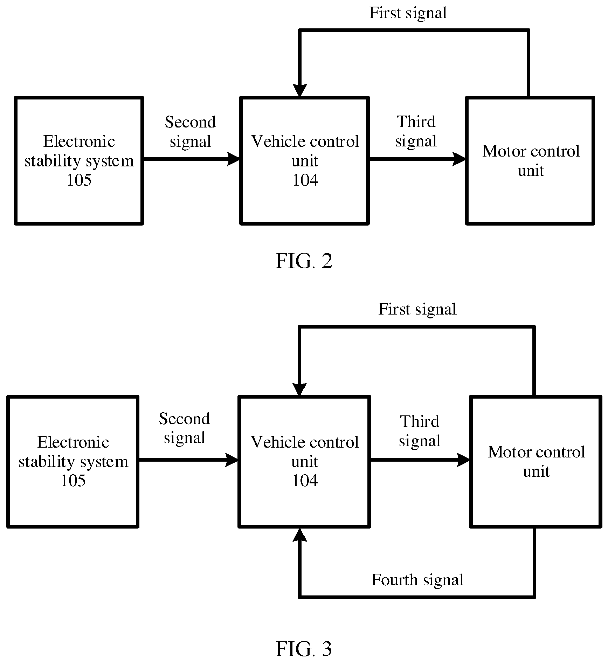

FIG. 2 is a diagram 1 of communication between the vehicle control unit and the motor control unit according to an embodiment of this application.

Communication may be established between the motor control unit 103, the vehicle control unit 104, and an electronic stability program 105 through wired transmission or wireless transmission. For example, the wired transmission may include a local area network (local area network, LAN), a serial bus, a controller area network (controller area network, CAN), and power line communication (power line communication, PLC). The CAN bus may further specifically include a power train (power train) domain, a chassis (chassis) domain, a body (body/comfort) domain, a cockpit (cockpit/infotainment) domain, an autonomous driving (ADAS) domain, and the like. The wireless transmission may include manners such as 6G\5G\4G\3G\2G, a general packet radio service (general packet radio service, GPRS), a wireless network (Wi-Fi), and Bluetooth.

The motor control unit 103 is connected to the vehicle control unit 104, and the motor control unit 103 may send a first signal to the vehicle control unit 104. The electronic stability program 105 is connected to the motor control unit 103 or the vehicle control unit 104, and the electronic stability program 105 may send a second signal to the vehicle control unit 104. The vehicle control unit 104 is configured to send a third signal to the motor control unit 103.

The first signal indicates a running status of the motor. In an embodiment, the first signal includes torque indication information. The torque indication information includes a front axle torque status signal and/or a rear axle torque status signal, and a front axle torque saturation state signal and/or a rear axle torque saturation state signal. In an embodiment, the first signal includes rotational speed indication information. The rotational speed indication information includes a rotational speed of the front axle motor and/or a rotational speed of the rear axle motor.

When the drive motor is in a saturation state, the wheel idles or is locked. Therefore, the motor control unit 103 sends the front axle torque saturation state signal and/or the rear axle torque saturation state signal to the vehicle control unit 104, so that the vehicle control unit 104 can adjust a torque control signal based on the front axle torque saturation state signal and the rear axle torque saturation state signal.

The motor control unit 103 may further send the rotational speed of the front axle motor and the rotational speed of the rear axle motor to the vehicle control unit 104, so that the vehicle control unit 104 determines, based on the rotational speed of the front axle motor and the rotational speed of the rear axle motor, whether the front axle motor of the vehicle reaches the saturation state and whether the rear axle motor of the vehicle reaches the saturation state.

In addition, the motor control unit 103 may further send the front axle torque saturation state signal and/or the rear axle torque saturation state signal, the rotational speed of the front axle motor, and the rotational speed of the rear axle motor to the vehicle control unit 104 at the same time, so that the foregoing two types of information are mutually redundant and back up each other. This means that both the motor control unit 103 and the vehicle control unit 104 determine whether the front axle motor of the vehicle is in the saturation state, thereby improving control accuracy.

The first signal includes but is not limited to the front axle torque saturation state signal, the rear axle torque saturation state signal, the rotational speed of the front axle motor, and the rotational speed of the rear axle motor that are described in the foregoing embodiments. Any parameter that may be used to determine whether the front axle motor reaches the saturation state and whether the rear axle motor of the vehicle reaches the saturation state may be included in the first signal. This is not excessively limited herein.

In addition, the motor control unit 103 and the vehicle control unit 104 may further determine a front axle slip rate based on a speed of the front wheels and a current vehicle speed, and determine a rear axle slip rate based on a speed of the rear wheels and the current vehicle speed; determine, based on the front axle slip rate, whether the front axle motor of the vehicle reaches the saturation state, to send the front axle torque saturation state signal to the vehicle control unit; and determine, based on the rear axle slip rate, whether the rear axle motor of the vehicle reaches the saturation state.

In the vehicle control field, a smaller absolute value of the slip rate of the vehicle indicates better braking effect, and shorter time for the vehicle to enter a stable state from an unstable state. This further ensuring vehicle safety. When the vehicle is in the unstable state, stability control is continuously performed on the vehicle by monitoring the front axle slip rate and the rear axle slip rate of the vehicle.

It can be learned from a curve of a relationship between the slip rate and a road adhesion coefficient that a traveling status of the vehicle may be divided into three states based on the absolute value of the slip rate: a linear area (the slip rate satisfies $0 \leq s < 0.05$), a transient area (the slip rate satisfies $0.05 \leq s < 0.3$), and a saturated area (the slip rate satisfies $0.3 \leq s < 1$).

In a normal traveling process of the vehicle, the wheel speed is basically equal to the vehicle speed, and a corresponding slip rate is very low, which is usually less than 0.05. However, in an acceleration or braking process of the vehicle, the slip rate of the tire quickly changes from the linear area to the saturated area. When the slip rate is excessively high or reaches the saturated area, the wheel idles or is locked. In this case, wheel torque reaches saturation. If the wheel torque continues to be increased in an icy and snowy road or in a turning condition, the wheel slips.

The current vehicle speed may be detected via a wheel speed sensor installed on each wheel of the electric vehicle. The wheel speed sensor may be but is not limited to a magnetoelectric wheel speed sensor, a Hall wheel speed sensor, or the like. Alternatively, the current vehicle speed may be estimated through wheel speeds of the four wheels.

For example, the vehicle speed may be determined by using the following several methods. 1. Minimum wheel speed method: When vehicle stability control is performed in the traveling process, because the wheel slips, and the wheel speed is greater than the vehicle speed, a minimum wheel speed of the four wheels may be used as the vehicle speed. 2. Slope method: When vehicle stability control is performed, an initial vehicle speed when entering vehicle stability control is determined, and an acceleration of the electric vehicle is determined after a road surface condition and a driving condition are identified, to calculate a speed value in real time as a reference vehicle speed. 3. Method determined based on a vehicle dynamics model. This method is based on models of the vehicle and the wheel, which can correct the reference vehicle speed in real time and determine an actual vehicle speed. It may be understood that the method for estimating the vehicle speed in this embodiment of this application is not limited to the foregoing plurality of methods.

In a possible implementation, a slip rate calculation method may meet the following formula:

$$\lambda = \frac{(\omega * R - V)}{\omega * R}$$

, where $\lambda$ is the slip rate, $\omega$ is a tire rotational speed, R is a tire radius, and V is the vehicle speed.

When the tire rotational speed cannot be obtained, the slip rate calculation method may comply with the following formula:

$$\lambda = \frac{(\omega_m * Ratio * R - V)}{\omega_m * Ratio * R}$$

,

where $\lambda$ is the slip rate, $\omega_m$ is the tire rotational speed, *Ratio* is a reducer speed ratio, *R* is the tire radius, and *V* is the vehicle speed.

In a possible implementation, when the front axle slip rate is within a target slip rate range, it is determined that the front axle motor of the vehicle reaches the saturation state; and when the rear axle slip rate is within the target slip rate range, it is determined that the rear axle motor of the vehicle reaches the saturation state.

The slip rate is classified into two conditions: a driving condition and a braking condition. When the wheel is in the driving condition, $\lambda_i$ is a positive number and ranges from 0 to 1. When the wheel is in the braking

condition, $\lambda_i$ is a negative number and ranges from -1 to 0. Based on the foregoing descriptions of the slip rate, the traveling status of the vehicle is divided into the three states based on the value of the slip rate, and the target slip rate range may be a value of a slip rate corresponding to the saturated area. In addition, usually, the slip rate $\lambda$ is not greater than 0.4 under the action of an antilock brake system (antilock brake system, ABS) and a traction control system. Therefore, for example, the target slip rate range may be set between 0.3 and 0.4.

The second signal indicates the traveling status of the vehicle. In this embodiment of this application, the traveling status of the vehicle includes the vehicle speed, the wheel speed, an acceleration, a yaw angle, , and a driver input parameter. The electronic stability program 105 may obtain parameters such as a longitudinal acceleration $a_x(m/s^2)$, a lateral acceleration $a_y(m/s^2)$, and a yawing angular velocity of the vehicle from a vehicle sensor, and determine, based on the longitudinal acceleration $a_x(m/s^2)$, the lateral acceleration $a_y(m/s^2)$, the yawing angular velocity, and the like of the vehicle, whether the front axle motor or the rear axle motor reaches the saturation state. The driver input parameter may be obtained from a driver input apparatus like the accelerator pedal, a brake pedal, or a steering wheel when the driver needs to change the current vehicle speed or a traveling direction of the electric vehicle. When the electric vehicle has an autonomous driving function, the electronic stability program 105 may obtain the driver input parameter from the advanced driver assistance system (advanced driver assistance system, ADAS).

The third signal is used to control torque of the motor. In an embodiment, the third signal indicates the motor control unit 103 to adjust a magnitude of torque of the front axle motor and/or the rear axle motor. After the motor control unit 103 receives the magnitude of the torque corresponding to the front axle motor, the motor control unit 103 adjusts the front axle torque based on the magnitude of the torque corresponding to the front axle motor, to implement stability control on the vehicle, and further ensure the stability and safety of the vehicle traveling. After the motor control unit 103 receives the magnitude of the rear axle torque, the motor control unit 103 adjusts the rear axle torque based on the magnitude of the torque corresponding to the rear axle motor, to implement stability control on the vehicle, and further ensure the stability and safety of the vehicle traveling. In an embodiment, the third signal may further include a torque magnitude adjustment indication, which may enable the motor controlled by the motor control unit 103 to perform a torque increase action or a torque decrease action, and may further remain the torque of the motor controlled by the motor control unit 103 unchanged.

For example, if the front axle torque of the current vehicle is $T_{f0}$, when the front axle motor reaches the saturation state, the third signal indicates the motor control unit 103 to control the torque of the front axle motor to remain at $T_{f0}$. If the rear axle torque of the current vehicle is $T_{r0}$, when the rear axle motor reaches the saturation state, the third signal indicates the motor control unit 103 to control the torque of the rear axle motor to remain at $T_{r0}$.

After the communication is established between the vehicle control unit 104 and the electronic stability program 105, a signal transmission speed is usually low. Therefore, before receiving the second signal, the vehicle control unit 104 may generate the third signal by using the first signal sent by the motor control unit 103, and send the third signal to any one or more of at least one motor control unit 103, so that the motor control unit 103 that receives the third signal adjusts the torque, to perform stability control on the vehicle. In this way, a control speed of an entire control process is faster, to reduce a slip rate of the entire vehicle on a slippery road surface.

In the foregoing implementation, because the vehicle control unit 104 and the motor control unit 103 are used as execution bodies of the stability control, control response of the vehicle is faster, so that the time for the vehicle to enter the stable state from the unstable state can be shorter, thereby further ensuring the vehicle safety.

When the vehicle already slips seriously, to perform stability control on the vehicle as soon as possible, in a possible implementation, the vehicle control unit 104 may further send the third signal to the any one or more of the at least one motor control unit 103 in response to the second signal, so that the motor control unit 103 that receives the third signal adjusts the torque, to perform stability control on the vehicle.

When not receiving the first signal, the vehicle control unit 104 may generate the third signal by using the second signal that is received most recently, and send the third signal to the any one or more of the at least one motor control unit 103, so that the motor control unit 103 that receives the third signal adjusts the torque, to perform stability control on the vehicle. In this way, the motor control unit 103 may be directly controlled by using the second signal sent by the electronic stability program 105 via the vehicle control unit 104, to obtain a faster control speed in a serious slip scenario.

To accurately allocate torque power to each wheel of the vehicle, in a possible implementation, the vehicle control unit 104 is configured to send the third signal to the any one or more of the at least one motor control unit 103 in response to receiving the first signal and the second signal, so that the motor control unit 103 that receives the third signal adjusts the torque, to perform stability control on the vehicle.

After receiving the first signal and the second signal, the vehicle control unit 104 determines a status of the current vehicle based on parameters in the first signal and the second signal, to arbitrate the torque, and then the vehicle control unit 104 sends the third signal to the any one or more of the at least one motor control unit 103, thereby greatly improving vehicle maneuverability.

To accurately allocate the torque power to each wheel of the vehicle, FIG. 3 is a diagram 2 of the communication between the vehicle control unit and the motor control unit according to an embodiment of this application.

In a possible implementation, the vehicle control unit 104 receives a fourth signal sent by the at least one motor control unit 103, the fourth signal indicates actual torque of the motor of the vehicle, and the vehicle control unit 104 is configured to send the third signal to the any one or more of the at least one motor control unit 103 in response to the fourth signal and the first signal and/or the second signal.

After receiving the first signal and/or the second signal, the vehicle control unit 104 determines a current vehicle status of the vehicle based on the actual torque of the motor of the vehicle for arbitration, and then the vehicle control unit 104 sends the third signal to the any one or more of the at least one motor control unit 103, thereby greatly improving the vehicle maneuverability.

When the vehicle control unit 104 determines the third signal, the magnitude of the torque corresponding to the front axle motor and the magnitude of the torque corresponding to the rear axle motor may also be determined based on weight distribution and wheel position distribution of the vehicle, to flexibly adjust the magnitude of the torque corresponding to the front axle motor and the magnitude of the torque corresponding to the rear axle motor.

In a possible implementation, when determining that the status of the vehicle is unstable due to slipping, the motor control unit 103 may control the front axle motor and the rear axle motor to keep running at a current rotational speed.

The status of the vehicle is classified into two types: unstable and stable. Usually, the status of the vehicle may be determined based on an angular velocity error between an actual yawing angular velocity of the vehicle and a target yawing angular velocity that indicates an expected trajectory of the driver.

The motor control unit 103 may determine the status of the vehicle based on the angular velocity error between the actual yawing angular velocity of the vehicle and the target yawing angular velocity at a current moment. The motor control unit 103 may further determine the actual yawing angular velocity based on a traveling parameter of the vehicle, for example, a longitudinal vehicle speed, a lateral vehicle speed, a wheel steering angle, the yawing angular velocity, the longitudinal acceleration, and the lateral acceleration, and determine the status of the vehicle by analyzing the foregoing parameters.

The motor control unit 103 determines the target yawing angular velocity based on the longitudinal vehicle speed, the wheel steering angle, and a steering characteristic factor; calculates the angular velocity error between the actual yawing angular velocity and the target yawing angular velocity; and when the angular velocity error exceeds a specified threshold range, determines that the status of the vehicle is unstable; otherwise, determines that the status of the vehicle is stable.

When determining that the angular velocity error does not fall within the threshold range formed by a first threshold and a second threshold, the motor control unit 103 determines that the status of the vehicle is unstable, where the first threshold is a positive number, and the second threshold is a negative number.

The motor control unit 103 may determine the status of the vehicle by using a determining method shown in the following formula:

$$\begin{cases} (thd1, \ \infty) \quad Unstable \\ [thd2, \ thd1] \quad Stable \\ (-\infty, \ thd2) \quad Unstable \end{cases}$$

where thd1 is the first threshold, and is thd1 a positive number; and thd2 is the second threshold, and thd2 is a negative number. Specific values of thd1 and thd2 are not limited in this application, and the values of thd1 and thd2 may be specifically set based on an actual scenario and different vehicles.

When it is determined that the status of the vehicle is unstable due to slipping, the front axle motor and the rear axle motor are controlled to keep running at the current rotational speed, so that the time for the vehicle to enter the stable state from the unstable state is shorter, thereby further ensuring the vehicle safety.

Based on a same concept, this application further provides a motor control unit 103. The motor control unit 103 is configured to control a drive motor of a vehicle, and the motor control unit 103 is connected to a vehicle control unit 104 and sends a first signal to the vehicle control unit 104. An electronic stability program 105 is connected to the motor control unit 103 or the vehicle control unit 104 and sends a second signal. The vehicle control unit 104 is configured to send a third signal to the motor control unit 103. After the motor control unit 103 sends the first signal, the motor control unit 103 outputs a control signal to the drive motor before or after receiving the second signal or the third signal, to perform stability control on the vehicle.

In a possible implementation, after the motor control unit 103 sends the first signal, the motor control unit 103 outputs the control signal to the drive motor in response to the third signal output by the vehicle control unit 104 after receiving the second signal, to perform stability control on the vehicle.

In a possible implementation, after the motor control unit 103 sends the first signal, the motor control unit 103 outputs the control signal to the drive motor in response to the second signal and the third signal that are received by the motor control unit 103, to perform stability control on the vehicle.

In a possible implementation, the first signal indicates that a motor of the vehicle reaches a torque saturation state; the second signal includes any one or more of the following parameters: an acceleration, a yaw angle, a wheel speed, and a driver input parameter; and the third signal indicates a magnitude of torque output by the motor control unit.

In a possible implementation, the first signal includes a motor rotational speed of the vehicle; the second signal includes any one or more of the following parameters: an acceleration, a yaw angle, a wheel speed, and a driver input parameter; and the third signal indicates a magnitude of torque output by the motor control unit.

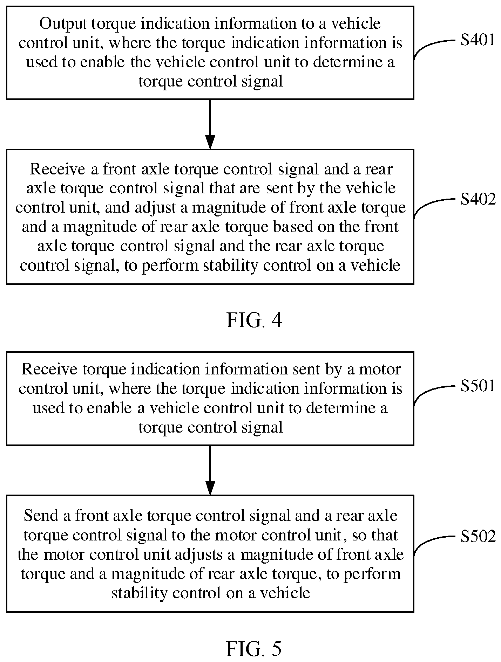

Based on a same concept, this application further provides a torque control method. FIG. 4 is a schematic flowchart 1 of a torque control method. Herein, an example in which the method is applied to a motor control unit 103 is used. The method includes the following steps.

S401: Output torque indication information to a vehicle control unit, where the torque indication information is used to enable the vehicle control unit to determine a torque control signal.

S402: Receive a front axle torque control signal and a rear axle torque control signal that are sent by the vehicle control unit, and adjust a magnitude of front axle torque and a magnitude of rear axle torque based on the front axle torque control signal and the rear axle torque control signal, to perform stability control on a vehicle.

FIG. 5 is a schematic flowchart 2 of a torque control method. An example in which the method is applied to a vehicle control unit is used. The method includes the following steps.

S501: Receive torque indication information sent by a motor control unit, where the torque indication information is used to enable the vehicle control unit to determine a torque control signal.

S502: Send a front axle torque control signal and a rear axle torque control signal to the motor control unit, so that the motor control unit adjusts a magnitude of front axle torque and a magnitude of rear axle torque, to perform stability control on a vehicle.

The torque control method provided in the foregoing embodiment and conventional ESP control may be mutually redundant and back up each other. In other words, the vehicle may implement stability control on the vehicle by using two sets of torque control methods at the same time, thereby further improving stability of the vehicle.

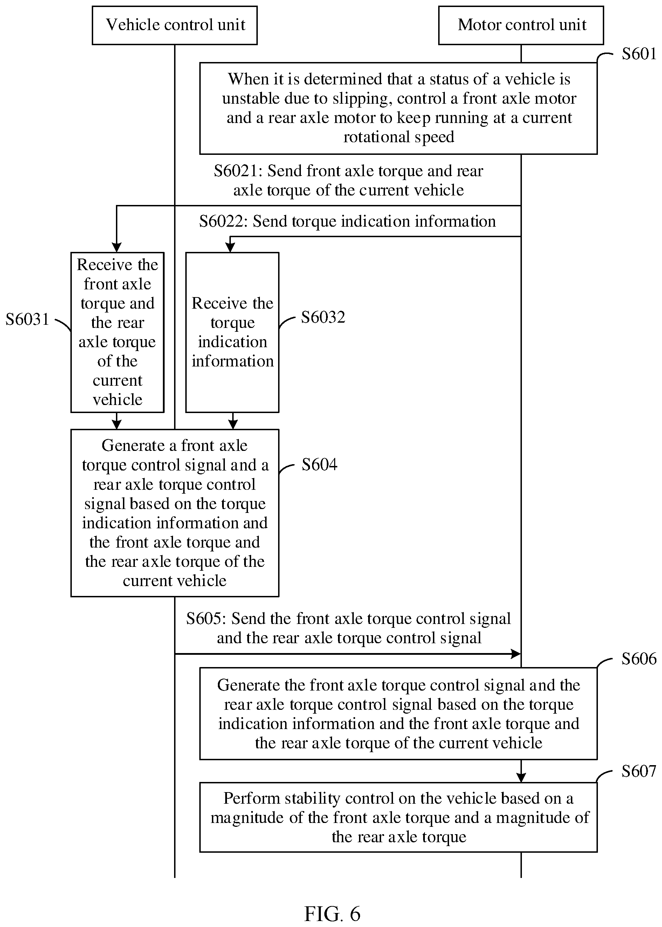

FIG. 6 is a schematic flowchart 3 of a torque control method. An example in which the method is applied to an electric vehicle including a motor control unit and a vehicle control unit is used. The method includes the following steps.

S601: When determining that a status of the vehicle is unstable due to slipping, the motor control unit controls a front axle motor and a rear axle motor to keep running at a current rotational speed. The motor control unit may determine the status of the vehicle based on an angular velocity error between an actual yawing angular velocity of the vehicle and a target yawing angular velocity at a current moment. The motor control unit may further determine the actual yawing angular velocity based on a traveling parameter of the vehicle, for example, a longitudinal vehicle speed, a lateral vehicle speed, a wheel steering angle, a yawing angular velocity, a longitudinal acceleration, and a lateral acceleration, and determine the status of the vehicle by analyzing the foregoing parameters.

S6021: The motor control unit sends torque indication information to the vehicle control unit. The torque indication information at least includes a front axle torque saturation state signal and/or a rear axle torque saturation state signal, and the vehicle control unit outputs a rotational speed of the front axle motor and a rotational speed of the rear axle motor. The vehicle control unit may determine, based on the rotational speed of the front axle motor and the rotational speed of the rear axle motor, whether the front axle motor of the vehicle reaches a saturation state and whether the rear axle motor of the vehicle reaches a saturation state.

S6022: The motor control unit sends front axle torque and rear axle torque of the current vehicle to the vehicle control unit. After receiving the front axle torque and the rear axle torque of the current vehicle, when the front axle motor reaches the saturation state, the vehicle control unit may generate a torque control signal based on the front axle torque of the current vehicle. When the rear axle motor reaches the saturation state, the vehicle control unit may generate the torque control signal based on the rear axle torque of the current vehicle. The torque control signal may enable the motor control unit to maintain original torque to control the motor.

S6031: The vehicle control unit receives the torque indication information sent by the motor control unit.

S6032: The vehicle control unit receives the front axle torque and the rear axle torque of the current vehicle that are sent by the motor control unit.

S604: The vehicle control unit generates a front axle torque control signal and a rear axle torque control signal based on the torque indication information and the front axle torque and the rear axle torque of the current vehicle.

The torque control signal may directly carry a magnitude of torque that needs to be adjusted by the motor control unit, and may further carry a torque adjustment indication. The torque value adjustment indication may be used to control torque increase, control torque decrease, or remain torque unchanged.

When the front axle motor reaches the saturation state, a second front axle torque control signal is sent to the motor control unit, where the second front axle torque control signal is used to control the torque of the front axle motor to remain unchanged. When the front axle motor does not reach the saturation state, a first front axle torque control signal is sent to the motor control unit, where the first front axle torque control signal is used to control the torque of the front axle motor to be adjusted to torque determined through arbitration allocation based on the vehicle speed, a wheel speed, a vehicle acceleration, a yaw angle signal, and a driver input signal. When the rear axle motor reaches the saturation state, a second rear axle torque control signal is sent to the motor control unit, where the second rear axle torque control signal is used to control the torque of the rear axle motor to remain unchanged. When the rear axle motor does not reach the saturation state, a first rear axle torque control signal is sent to the motor control unit, where the first rear axle torque control signal is used to control the torque of the rear axle motor to be adjusted to torque determined through arbitration allocation based on the vehicle speed, the wheel speed, the vehicle acceleration, the yaw angle signal, and the driver input signal.

S605: The vehicle control unit sends the front axle torque control signal and the rear axle torque control signal to the motor control unit.

S606: The motor control unit determines a magnitude of the front axle torque and a magnitude of the rear axle torque based on the front axle torque control signal and the rear axle torque control signal. After receiving the front axle torque control signal, the motor control unit determines the front axle torque based on the front axle torque control signal, and controls the front axle motor based on the front axle torque. After receiving the rear axle torque control signal, the motor control unit determines the rear axle torque based on the rear axle torque control signal, so that the front axle motor and the rear axle motor separately apply corresponding target torque to the front axle and the rear axle, thereby implementing stability control on the vehicle, and further ensuring stability and safety of vehicle traveling.

S607: The motor control unit performs stability control on the vehicle based on the magnitude of the front axle torque and the magnitude of the rear axle torque. When the vehicle is in an unstable state, the motor control unit may continuously perform any one or more of the foregoing steps, to finally determine the front axle torque and the rear axle torque, so as to continuously perform stability control on the vehicle.

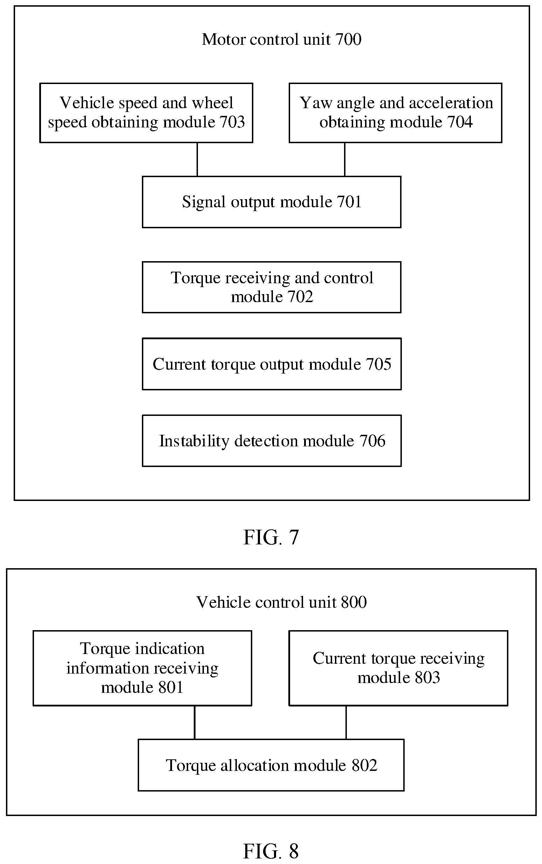

Based on a same concept, an embodiment of this application further provides a motor control unit, configured to implement the foregoing torque control method. FIG. 7 is a diagram of a structure of a motor control unit. Through logical function division, the motor control unit 700 includes the following several modules: a signal output module 701, configured to output torque indication information to a vehicle control unit, where the torque indication information is used by the vehicle control unit to determine a torque control signal; and a torque receiving and control module 702, configured to: receive a front axle torque control signal and a rear axle torque control signal that are sent by the vehicle control unit, and adjust a magnitude of front axle torque and a magnitude of rear axle torque based on the front axle torque control signal and the rear axle torque control signal, to perform stability control on a vehicle.

In a possible implementation, the signal output module 701 is specifically configured to:

output a front axle torque saturation state signal and/or a rear axle torque saturation state signal to the vehicle control unit, where the front axle torque saturation state signal indicates that a front axle motor of the vehicle reaches a saturation state, and the rear axle torque saturation state signal indicates that a rear axle motor of the vehicle reaches a saturation state; or
output a rotational speed of the front axle motor and a rotational speed of the rear axle motor to the vehicle control unit, so that the vehicle control unit determines whether the front axle motor and the rear axle motor of the vehicle reach the saturation state.

In a possible implementation, the motor control unit 700 further includes a vehicle speed and wheel speed obtaining module 703, configured to obtain a current vehicle speed and a wheel speed.

The signal output module 701 is specifically configured to: determine a front axle slip rate based on a speed of front wheels and the current vehicle speed, and determine a rear axle slip rate based on a speed of rear wheels and the current vehicle speed; and determine, based on the front axle slip rate, whether the front axle motor of the vehicle reaches the saturation state, to send the front axle torque saturation state signal to the vehicle control unit; and determine, based on the rear axle slip rate, whether the rear axle motor of the vehicle reaches the saturation state, to send the rear axle torque saturation state signal to the vehicle control unit.

In a possible implementation, the signal output module 701 is specifically configured to: when the front axle slip rate is within a target slip rate range, determine that the front axle motor of the vehicle reaches the saturation state, and output the front axle torque saturation state signal to the vehicle control unit; and when the rear axle slip rate is within the target slip rate range, determine that the rear axle motor of the vehicle reaches the saturation state, and output the rear axle torque saturation state signal to the vehicle control unit.

In a possible implementation, the motor control unit 700 further includes: a yaw angle and acceleration obtaining module 704, configured to obtain a yaw angle and an acceleration of the current vehicle.

The signal output module 701 is further configured to output the torque indication information to the vehicle control unit based on the current vehicle speed, the wheel speed, the yaw angle of the current vehicle, and the acceleration of the current vehicle.

In a possible implementation, the motor control unit 700 further includes:

a current torque output module 705, configured to obtain the front axle torque and the rear axle torque of the current vehicle, and send the front axle torque and the rear axle torque of the current vehicle to the vehicle control unit, so that the vehicle control unit determines the front axle torque control signal and the rear axle torque control signal based on the torque indication information, the front axle torque of the current vehicle, and the rear axle torque of the current vehicle.

In a possible implementation, the motor control unit 700 further includes:

an instability detection module 706, configured to: when determining that a status of the vehicle is unstable due to slipping, control the front axle motor and the rear axle motor to keep running at a current rotational speed.

Based on a same concept, this application further provides a vehicle control unit, configured to implement the foregoing torque control method. FIG. 8 is a diagram of a structure of a vehicle control unit. Through logical function division, the vehicle control unit 800 includes the following several modules: a torque indication information receiving module 801, configured to receive torque indication information sent by a motor control unit, where the torque indication information is used by the vehicle control unit 800 to determine a torque control signal; and

a torque allocation module 802, configured to send a front axle torque control signal and a rear axle torque control signal to the motor control unit 700, so that the motor control unit 700 adjusts a magnitude of front axle torque and a magnitude of rear axle torque, to perform stability control on a vehicle.

In a possible implementation, the torque indication information receiving module 801 is specifically configured to receive a front axle torque saturation state signal and/or a rear axle torque saturation state signal that are sent by the motor control unit 700, where the front axle torque saturation state signal indicates that a front axle motor of the vehicle reaches a saturation state, and the rear axle torque saturation state signal indicates that a rear axle motor of the vehicle reaches a saturation state; or

receive a rotational speed of the front axle motor and a rotational speed of the rear axle motor that are sent by the motor control unit 700, to determine whether the front axle motor and the rear axle motor of the vehicle reach the saturation state.

In a possible implementation, the torque indication information receiving module 801 is specifically configured to:

determine a front axle slip rate based on the rotational speed of the front axle motor, the rotational speed of the rear axle motor, and a current vehicle speed, and determine a rear axle slip rate based on a speed of rear wheels and the current vehicle speed; and

determine, based on the front axle slip rate, whether the front axle motor of the vehicle reaches the saturation state; and determine, based on the rear axle slip rate, whether the rear axle motor of the vehicle reaches the saturation state.

In a possible implementation, the torque indication information receiving module 801 is specifically configured to:

when the front axle slip rate is within a target slip rate range, determine that the front axle motor of the vehicle reaches the saturation state; and when the rear axle slip rate is within the target slip rate range, determine that the rear axle motor of the vehicle reaches the saturation state.

In a possible implementation, the torque allocation module 802 is specifically configured to:

determine a first front axle torque control signal and a first rear axle torque control signal based on the vehicle speed, a wheel speed, a vehicle acceleration, a yaw angle signal, a driver input signal, and total front and rear torque, where the first front axle torque control signal is configured to control the front axle motor to be first torque, the first rear axle torque control signal is configured to control the rear axle motor to be second torque, and a sum of the first torque and the second torque is the total front and rear torque;

when the front axle motor reaches the saturation state, send a second front axle torque control signal to the motor control unit, where the second front axle torque control signal is used to control the torque of the front axle motor to remain unchanged, otherwise, send the first front axle torque control signal to the motor control unit; and

when the rear axle motor reaches the saturation state, send a second rear axle torque control signal to the motor control unit, where the second rear axle torque control signal is used to control the torque of the rear axle motor to remain unchanged, otherwise, send the first rear axle torque control signal to the motor control unit.

In a possible implementation, the vehicle control unit 800 further includes a current torque receiving module 803, configured to receive the front axle torque and the rear axle torque of the current vehicle that are sent by the motor control unit; and the torque allocation module 802 is specifically configured to send the front axle torque control signal and the rear axle torque control signal to the motor control unit based on the torque indication information, the front axle torque of the current vehicle, and the rear axle torque of the current vehicle.

According to the motor control unit and the vehicle control unit provided in this application, when determining that the vehicle is unstable, the motor control unit controls the front axle motor and the rear axle motor to keep running at the current rotational speed. The motor control unit outputs the torque indication information to the vehicle control unit. The vehicle control unit determines, based on the front axle torque saturation state signal and/or the rear axle torque saturation state signal, the rotational speed of the front axle motor, and the rotational speed of the rear axle motor, whether the front axle motor of the vehicle reaches the saturation state and whether the rear axle motor of the vehicle reaches the saturation state, and adjusts the torque control signal based on the saturation state of the motor, so that the motor control unit adjusts the torque of the front axle and the rear axle based on the torque control signal. The slip rate on the slippery road surface is significantly reduced, a closed-loop speed from instability to stability is shortened from seconds to milliseconds, and the torque power allocation between the front axle and the rear axle can be further implemented, thereby greatly improving the vehicle maneuverability.

It should be noted that division into the modules in the foregoing embodiments is an example, is merely logical function division, and may be other division in an actual implementation. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium, and includes several instructions for instructing a computer device (which may be a personal computer, a server, or a network device) or a processor (processor) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

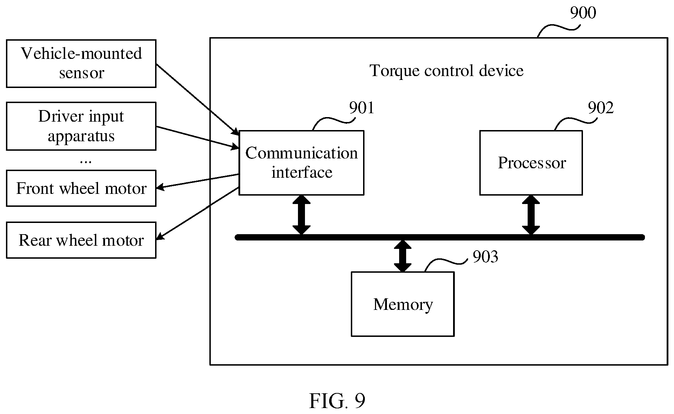

Based on the foregoing embodiments, an embodiment of this application further provides a torque control device. The device is applicable to a vehicle driven by a front axle and a rear axle in a distributed manner, is configured to implement the foregoing torque control method, and has functions of the motor control unit 700 shown in FIG. 7 and the vehicle control unit 800 shown in FIG. 8. Refer to FIG. 9. The torque control device 900 includes a communication interface 901, a processor 902, and a memory 903.

The communication interface 901, the memory 903, and the processor 902 are connected to each other. Optionally, the communication interface 901, the memory 903, and the processor 902 may be connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, only one thick line indicates the bus in FIG. 9, but this does not mean that there is only one bus or only one type of bus.

The communication interface 901 is configured to communicate with another component in the vehicle. For example, the communication interface 901 obtains a vehicle speed, a wheel speed, a vehicle acceleration, a yaw angle signal, and a driver input signal from a vehicle-mounted sensor and a driver input apparatus. For another example, the communication interface 901 sends calculated front axle torque and rear axle torque to a front axle motor and a rear axle motor, to implement final torque control.

The processor 902 is configured to implement the torque control method shown in FIG. 4, FIG. 5, or FIG. 6. For details, refer to the descriptions in the foregoing embodiments. Details are not described herein again. Optionally, the processor 902 may be a central processing unit (central processing unit, CPU) or another hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL), or any combination thereof. The processor 902 may implement the foregoing functions by hardware or by hardware executing corresponding software.

The memory 903 is configured to store program instructions, data, and the like. Specifically, the program instructions may include program code, and the program code includes computer operation instructions. The memory 903 may include a random access memory (random access memory, RAM), and may further include a non-volatile memory (non-volatile memory), for example, at least one disk memory. The processor 902 executes a program stored in the memory 903, and implements the foregoing functions by using the foregoing components, to finally implement the methods provided in the foregoing embodiments.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer storage medium. The computer storage medium stores a computer program. When the computer program is executed by a computer, the computer is enabled to perform the methods provided in the foregoing embodiments.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application further provides a chip system. The chip system includes a processor, configured to support a computer apparatus in implementing functions related to a terminal device in the methods provided in the foregoing embodiments. In a possible design, the chip system further includes a memory, and the memory is configured to store a program and data that are necessary for the computer apparatus. The chip system may include a chip or may include a chip and another discrete component.

Based on the foregoing embodiments, an embodiment of this application provides an electric vehicle. The electric vehicle includes the motor control unit and the vehicle control unit described in the foregoing embodiments, and is configured to implement final stability control.

Based on the foregoing embodiments, an embodiment of this application provides a powertrain, including the motor control unit and the vehicle control unit described in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A vehicle control unit, wherein the vehicle control unit is connected to at least one motor control unit and is configured to receive a first signal sent by the at least one motor control unit, wherein the first signal indicates a running status of a motor; the vehicle control unit is connected to an electronic stability program and receives a second signal sent by the electronic stability program, wherein the second signal indicates a traveling status of a vehicle; and the vehicle control unit is configured to:
   in response to the first signal, send a third signal to any one or more of the at least one motor control unit before receiving the second signal, so that the motor control unit that receives the third signal adjusts torque, to perform stability control on the vehicle.

2. The vehicle control unit according to claim 1, wherein the vehicle control unit is configured to:
   send the third signal to the any one or more of the at least one motor control unit in response to the second signal, so that the motor control unit that receives the third signal adjusts the torque, to perform stability control on the vehicle.

3. The vehicle control unit according to claim 1, wherein the vehicle control unit is configured to:

send the third signal to the any one or more of the at least one motor control unit in response to receiving the first signal and the second signal, so that the motor control unit that receives the third signal adjusts the torque, to perform stability control on the vehicle.

4. The vehicle control unit according to any one of claims 1 to 3, wherein a signal sending period of the first signal sent by the at least one motor control unit is less than a signal sending period of the second signal sent by the electronic stability program.

5. The vehicle control unit according to any one of claims 1 to 4, wherein the first signal indicates that the motor of the vehicle reaches a torque saturation state;

   the second signal comprises any one or more of the following parameters: an acceleration, a yaw angle, a wheel speed, and a driver input parameter; and
   the third signal indicates a magnitude of the torque output by the motor control unit.

6. The vehicle control unit according to any one of claims 1 to 4, wherein the first signal comprises a motor rotational speed of the vehicle;

   the second signal comprises any one or more of the following parameters: an acceleration, a yaw angle, a wheel speed, and a driver input parameter; and
   the third signal indicates a magnitude of the torque output by the motor control unit.

7. The vehicle control unit according to any one of claims 1 to 6, wherein the vehicle control unit receives a fourth signal sent by the at least one motor control unit, the fourth signal indicates actual torque of the motor of the vehicle, and the vehicle control unit is configured to:
   send the third signal to the any one or more of the at least one motor control unit in response to the fourth signal and the first signal and/or the second signal.

8. The vehicle control unit according to any one of claims 1 to 7, wherein the vehicle control unit is configured to:
   send a fifth signal to the electronic stability program, wherein the fifth signal indicates the actual torque of the motor of the vehicle.

9. A motor control unit, configured to control a drive motor of a vehicle, wherein the motor control unit is connected to a vehicle control unit and sends a first signal to the vehicle control unit, wherein the first signal indicates a running status of a motor; an electronic stability program is connected to the motor control unit or the vehicle control unit and sends a second signal, wherein the second signal indicates a traveling status of the vehicle; and the vehicle control unit is configured to send a third signal to the motor control unit; and
   after the motor control unit sends the first signal, the motor control unit outputs a control signal to the drive motor before or after receiving the second signal or the third signal, to perform stability control on the vehicle.

10. The motor control unit according to claim 9, wherein after the motor control unit sends the first signal, the motor control unit outputs the control signal to the drive motor in response to the third signal output by the vehicle control unit after receiving the second signal, to perform stability control on the vehicle.

11. The motor control unit according to claim 9, wherein after the motor control unit sends the first signal, the motor control unit outputs the control signal to the drive motor in response to the second signal and the third signal that are received by the motor control unit, to perform stability control on the vehicle.

12. The motor control unit according to claim 10 or 11, wherein the first signal indicates that the motor of the vehicle reaches a torque saturation state;

   the second signal comprises any one or more of the following parameters: an acceleration, a yaw angle, a wheel speed, and a driver input parameter; and
   the third signal indicates a magnitude of torque output by the motor control unit.

13. The motor control unit according to claim 10 or 11, wherein the first signal comprises a motor rotational speed of the vehicle;

   the second signal comprises any one or more of the following parameters: an acceleration, a yaw angle, a wheel speed, and a driver input parameter; and
   the third signal indicates a magnitude of torque output by the motor control unit.

14. A powertrain, comprising the vehicle control unit according to any one of claims 1 to 8, or the motor control unit according to any one of claims 9 to 13.

15. An electric vehicle, comprising the vehicle control unit according to any one of claims 1 to 8, or the motor control unit according to any one of claims 9 to 13.

Electric vehicle 100

Wheel

Front axle motor
101

Wheel

Vehicle
control unit
104

Motor
control unit
103

Wheel

Rear axle motor
102

Wheel

FIG. 1

First signal

| Electronic stability system 105 | Second signal → | Vehicle control unit 104 | Third signal → | Motor control unit |

**FIG. 2**

First signal

| Electronic stability system 105 | Second signal → | Vehicle control unit 104 | Third signal → | Motor control unit |

Fourth signal

**FIG. 3**

Output torque indication information to a vehicle control unit, where the torque indication information is used to enable the vehicle control unit to determine a torque control signal — S401

Receive a front axle torque control signal and a rear axle torque control signal that are sent by the vehicle control unit, and adjust a magnitude of front axle torque and a magnitude of rear axle torque based on the front axle torque control signal and the rear axle torque control signal, to perform stability control on a vehicle — S402

FIG. 4

Receive torque indication information sent by a motor control unit, where the torque indication information is used to enable a vehicle control unit to determine a torque control signal — S501

Send a front axle torque control signal and a rear axle torque control signal to the motor control unit, so that the motor control unit adjusts a magnitude of front axle torque and a magnitude of rear axle torque, to perform stability control on a vehicle — S502

FIG. 5

Vehicle control unit | Motor control unit

S601

When it is determined that a status of a vehicle is unstable due to slipping, control a front axle motor and a rear axle motor to keep running at a current rotational speed

S6021: Send front axle torque and rear axle torque of the current vehicle

S6022: Send torque indication information

S6031 — Receive the front axle torque and the rear axle torque of the current vehicle

Receive the torque indication information — S6032

Generate a front axle torque control signal and a rear axle torque control signal based on the torque indication information and the front axle torque and the rear axle torque of the current vehicle — S604

S605: Send the front axle torque control signal and the rear axle torque control signal

S606

Generate the front axle torque control signal and the rear axle torque control signal based on the torque indication information and the front axle torque and the rear axle torque of the current vehicle

S607

Perform stability control on the vehicle based on a magnitude of the front axle torque and a magnitude of the rear axle torque

FIG. 6

Motor control unit 700

Vehicle speed and wheel speed obtaining module 703

Yaw angle and acceleration obtaining module 704

Signal output module 701

Torque receiving and control module 702

Current torque output module 705

Instability detection module 706

FIG. 7

Vehicle control unit 800

Torque indication information receiving module 801

Current torque receiving module 803

Torque allocation module 802

FIG. 8

900

Torque control device

Vehicle-mounted sensor

Driver input apparatus

...

Front wheel motor

Rear wheel motor

901

Communication interface

902

Processor

903

Memory

FIG. 9

## INTERNATIONAL SEARCH REPORT

| International application No. |
| --- |
| **PCT/CN2023/101893** |

| A. | CLASSIFICATION OF SUBJECT MATTER |
| --- | --- |

B60L15/20(2006.01)i; B60R16/023(2006.01)i

According to International Patent Classification (IPC) or to both national classification and IPC

| B. | FIELDS SEARCHED |
| --- | --- |

Minimum documentation searched (classification system followed by classification symbols)

IPC:B60L; B60R

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, CNKI: 打滑, 电机, 电机控制器, 稳定, 整车, 整车控制器, control, MCU, motor, skid, stability, VCU, vehicle,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 109747435 A (GEELY AUTOMOBILE RESEARCH INSTITUTE (NINGBO) CO., LTD. et al.) 14 May 2019 (2019-05-14) description, paragraph [0003] | 1-8, 14-15 |
| Y | CN 110103725 A (HEBEI ECO-EV AMPEREX TECHNOLOGY CO., LTD.) 09 August 2019 (2019-08-09) description, paragraphs [0002]-[0059], and figures 1-2 | 1-8, 14-15 |
| X | CN 112721647 A (CHERY NEW ENERGY AUTOMOBILES CO., LTD.) 30 April 2021 (2021-04-30) description, paragraphs [0006]-[0086], and figures 1-5 | 9-15 |
| PX | CN 115675112 A (SHANGHAI HUAWEI DIGITAL ENERGY TECHNOLOGY CO., LTD.) 03 February 2023 (2023-02-03) claims 1-15 | 1-15 |
| A | WO 2020253676 A1 (GREAT WALL MOTOR CO., LTD.) 24 December 2020 (2020-12-24) entire document | 1-15 |

| ☐ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 September 2023** | **27 September 2023** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101893**

| Patent document cited in search report | | | Publication date (day/month/year) | Patent family member(s) | Publication date (day/month/year) |
|---|---|---|---|---|---|
| CN | 109747435 | A | 14 May 2019 | None | |
| CN | 110103725 | A | 09 August 2019 | None | |
| CN | 112721647 | A | 30 April 2021 | None | |
| CN | 115675112 | A | 03 February 2023 | None | |
| WO | 2020253676 | A1 | 24 December 2020 | None | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202211117088